## (19) Europäisches Patentamt
European Patent Office
Office européen des brevets

(11) **EP 0 630 923 B2**

## (12) NEUE EUROPÄISCHE PATENTSCHRIFT

(45) Veröffentlichungstag und Bekanntmachung des Hinweises auf die Entscheidung über den Einspruch:
**22.01.2003 Patentblatt 2003/04**

(45) Hinweis auf die Patenterteilung:
**13.01.1999 Patentblatt 1999/02**

(21) Anmeldenummer: **94109545.7**

(22) Anmeldetag: **21.06.1994**

(51) Int Cl.$^7$: **C08G 18/62**, C09D 175/04

(54) **Überzugsmittel und deren Verwendung, insbesondere bei der Herstellung transparenter und pigmentierter Deckschichten**

Coating compounds and their use, in particular in the preparation of clear and pigmented top layers

Agent de revêtement et son utilisation, en particulier pour la préparation de couches supérieures claires et pigmentées

(84) Benannte Vertragsstaaten:
**AT BE CH DE DK ES FR GB GR IT LI NL PT SE**

(30) Priorität: **23.06.1993 DE 4320727**

(43) Veröffentlichungstag der Anmeldung:
**28.12.1994 Patentblatt 1994/52**

(73) Patentinhaber: **E.I. DU PONT DE NEMOURS AND COMPANY**
**Wilmington Delaware 19898 (US)**

(72) Erfinder:
- **Bederke, Klaus, Dr.**
  **D-45549 Sprockhövel (DE)**
- **Bremer, Gerhard, Dr.**
  **D-50226 Frechen (DE)**
- **Kerber, Hermann**
  **D-42369 Wuppertal (DE)**
- **Krumme, Manfred**
  **D-50374 Erftstadt (DE)**
- **Sadowski, Fritz, Dr.**
  **D-50259 Pulheim (DE)**
- **Stephan, Werner**
  **D-42111 Wuppertal (DE)**
- **Ley, Olaf**
  **D-42329 Wuppertal (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
**EP-A- 0 470 461        EP-A- 0 496 210**
**DE-A- 3 545 891        DE-A- 3 546 594**
**FR-A- 2 295 048**

- **Swaraj P, Surface coatings, J. Wiley and Sons, pp. 290-307**

**Beschreibung**

Die Erfindung betrifft ein Verfahren zur Reparaturlackierung von Kraftfahrzeugkarosserien und deren Teilen unter Verwendung von Überzugsmitteln auf der Basis hydroxylfunktioneller (Meth)acryl-Copolymerisate und von Polyisocyanaten, die zu witterungsbeständigen Überzügen verarbeitet werden können, die sich durch eine rasche Trocknung, hohe Brillanz, Ablaufsicherheit und Bewitterungsbeständigkeit auszeichnen.

Fremdvernetzbare, hydroxylfunktionelle (Meth)acryl-Copolymerisate, die mit Polyisocyanaten zu bewitterungsbeständigen Überzügen verarbeitet werden können, sind bekannt. Die DE-A 24 60 329 beschreibt niedrigmolekulare Polymerisate auf Styrol- und (Meth)acrylester-Basis mit geringer molekularer Uneinheitlichkeit und ein Verfahren zu ihrer Herstellung. Derartiger Copolymerisate sind einerseits vom ökonomischen Standpunkt her nicht vertretbar, weil bei ihrer Herstellung in einer hohen Verdünnung gearbeitet wird (geringe Ausbeute, hohe Lösemittelverluste) und hohe Initiator-Anteile zum Einsatz kommen und andererseits weil hochgiftige Nebenprodukte (z.B. Tetramethylbernsteinsäuredinitril) entstehen.

Darüberhinaus genügen diese bekannten Copolymerisate beim Einsatz in Lacken nicht der Forderung kurzer Trokkenzeiten, der störungsfreien Applikation und der Beständigkeit gegen Lösemittel, insbesondere Superbenzin.

In der DE-0-35 46 594 wird die Herstellung von hydroxylgruppenhaltigen (Meth)acryl-Copolymerisaten beschrieben, die zusammen mit Epoxidharzen und gegebenenfalls Nitrocellulose mit Polyisocyanaten in Lacken, insbesondere zur Herstellung von Grundierungen und Füllerschichten, eingesetzt werden sollen. Derartige Lacke zeigen unbefriedigende Eigenschaften bezüglich der Vergilbung und Wetterbeständigkeit.

Aufgabe der Erfindung war die Bereitstellung eines Verfahrens zur Reparaturlackierung von Kraftfahrzeugkarosserien und deren Teilen unter Verwendung von Überzugsmitteln, die für Decklackschichten (pigmentierte Decklackschichten oder transparente Klarlackschichten) geeignet sind, kurze Trocknungszeiten, eine störungsfreie Applikation auch bei Lackierung nur in einem Spritzgang ergeben (die ablaufsicher und kochersicher sind), und zu Überzügen führen, die vergilbungsfrei und witterungsbeständig sind und hohen Glanz, Fülle und Brillanz ergeben.

Es hat sich gezeigt, daß diese Aufgabe gelöst werden kann durch das nachstehende, einen Gegenstand der Erfindung bildende Verfahren zur Reparaturlackierung von Kraftfahrzeugkarosserien oder deren Teilen, das dadurch gekennzeichnet ist, dass man einen pigmentierten Deckschichtüberzug aufbringt oder eine Basislacküberzugsschicht aus einem Basislack auf Lösemittelbasis oder auf wässriger Basis aufbringt und die Basislackschicht mit einem pigmentfreien, transparenten Überzug versieht, wobei man zur Herstellung des pigmentierten Deckschichtüberzugs oder zur Herstellung des pigmentfreien transparenten Überzugs ein Überzugsmittel auf der Basis von hydroxyfunktionellen (Meth)acryl-Copolymerisaten, aliphatischen und/oder cycloaliphatischen Polyisocyanaten, Lösemitteln sowie gegebenenfalls lacküblichen Additiven und Pigmenten verwendet, das frei von Epoxidharzen und Nitrocellulose ist und als Bindemittel enthält:

A) ein oder mehrere hydroxylgruppenhaltige (Meth)acryl-Copolymerisate aus

   a1) 47 - 53 Gew.-% einer oder mehrerer aromatischer Vinylverbindungen,
   a2) 28 - 33 Gew.-% eines oder mehrerer Hydroxyalkylmethacrylate,
   a3) 14 - 19 Gew.-% eines oder mehrerer Alkyl(meth)acrylate, und
   a4) 0,5 - 2 Gew.-% Acrylsäure und/oder Methacrylsäure,

   mit einer Hydroxylzahl von 120 - 160 mg KOH/g, einer Säurezahl von 5 bis 15 mg KOH/g, einem Gewichtsmittel von 10000 bis 20000 und einer Glasübergangstemperatur von +40°C bis +60°C, und
   B) ein aliphatisches und/oder cycloaliphatisches Polyisocyanat oder einem Gemisch derartiger Polyisocyanate in einer solchen Menge, daß auf eine Hydroxylgruppe der Komponente A) 0,5 bis 2,0 Isocyanat-gruppen entfallen.

Gemäß einer bevorzugten Ausführungsform der Erfindung wird als Komponente A) ein (Meth)acryl-Copolymerisat eingesetzt, worin
   die Komponente a1) Styrol oder ein Styrolderivat ist,
   die Komponente a2) ein Hydroxyethylmethacrylat und
   die Komponente a3) n-Butyl(meth)acrylat ist.

Gemäß einer weiteren bevorzugten Ausführungsform ist die Komponente A) erhältlich aus:

   a1) 47,5 - 52,5 Gew.-% Styrol
   a2) 28,0 - 33,0 Gew.-% 2-Hydroxyethylmethacrylat
   a3) 14,0 - 19,0 Gew.-% n-Butylacrylat und
   a4) 0,5 - 1,5 Gew.-% Acrylsäure.

Der hier verwendete Ausdruck (meth)acryl soll acryl und/oder methacryl bedeuten.

Die Herstellung der in dem erfindungsgemäß verwendeten Überzugsmittel enthaltenen (Meth)acryl-Copolymerisate kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Heuben, Weyl, Methoden der Organischen Chemie, 4.Aufl., Band 14/1, S.24-255 (1961).

Das Lösungspolymerisationsverfahren wird für die Herstellung der im erfindungsgemäß verwendeten Überzugsmittel eingesetzten (Meth)acryl-Copolymerisate bevorzugt. Bei diesem Verfahren wird das Lösemittel in das Reaktionsgefäß vorgelegt, auf Siedetemperatur geheizt und das Monomeren/Initiatorgemisch kontinuierlich in einer bestimmten Zeit zudosiert.

Die Polymerisation wird bevorzugt bei Temperaturen zwischen 100°C und 160°C, vorzugsweise bei 130°C bis 150°C durchgeführt,

Die Polymerisationsreaktion kann mit bekannten Polymerisationsinitiatoren gestartet werden. Geeignete Initiatoren sind beispielsweise Perund Azo-Verbindungen, die in einer Reaktion 1. Ordnung thermisch in Radikale zerfallen. Initiatorart und Menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclo-hexylperoxydicarbont; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azobis(2,4-dimethylvaleronitril),2,2'-Azo-bis(2-methylbutyronitril),1,1'-Azo-bis-cyclohexancarbonitril, Azo-bis-isobutyronitril.

Bevorzugt werden die Polymerisationsinitiatoren, insbesondere die Perester in einer Menge von 0,2 bis 5 Gew.-% auf die Monomeren-Einwaage, eingesetzt.

Als organische Lösemittel, die zweckmäßigerweise bei der Lösungspolymerisation sowie später auch in dem erfindungsgemäßen Überzugsmittel eingesetzt werden können, eignen sich beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen) und aliphatische Kohlenwasserstoffe können ebenfalls im Verschnitt mit den oben genannten Lösemitteln eingesetzt werden.

Zur Regelung des Molekulargewichts können insbesondere bei der bevorzugten Lösungspolymerisation Kettenüberträger mitverwendet werden. Beispiele sind Mercaptane, Thioglykolsäureester, Chlorkohlenwasserstoffe, Cumol, dimeres alpha-Methylstyrol.

Die Polymerisationsbedingungen (Reaktionstemperatur, Zulaufzeit der Monomerenmischung, Lösungskonzentration) werden so eingerichtet, daß die (Meth)acryl-Copolymerisate für das erfindungsgemäße Überzugsmittel ein Zahlenmittel (bestimmt durch Gelpermeationschromatographie unter Verwendung von Polystyrol als Eichsubstanz) zwischen 10000 und 20000 aufweisen.

Die hydroxylgruppenhaltigen (Meth)acryl-Copolymerisate des erfindungsgemäßen Überzugsmittels liegen in einem Glasübergangstemperatur-Bereich von +40°C bis +60°C, berechnet aus der Glasübergangstemperatur der Homopolymerisate der einzelnen der in der Literatur angegebenen Monomeren (FOX-Gleichung, s. z.B. Polymere Werkstoffe, Batzer, 1985, Seite 307).

Als Monomerkomponenten für die Herstellung der hydroxylgruppenhaltigen (Meth)acryl-Copolymerisate werden aromatische Vinylverbindungen, bevorzugt Styrol und seine Derivate, wie Vinyltoluol, Hydroalkylmethacrylate, insbesondere mit 2 bis 4 C-Atomen im Alkylteil, bevorzugt 2-Hydroxyethylmethacrylat, Alkyl(meth)acrylate, insbesondere mit 2 bis 6 C-Atomen im Alkylteil, bevorzugt n-Butylacrylat und (Meth)acrylsäure, bevorzugt Acryisäure, eingesetzt.

Die (Meth)acryl-Copolymerisate werden in den erfindungsgemäßen Überzugsmitteln mit Vernetzungsmitteln, nämlich Polyisocyanaten oder Prepolyisocyanaten kombiniert.

Der Anteil an Polyisocyanat-Vernetzer wird so gewählt, daß auf eine Hydroxyl-Gruppe des Bindemittel-Komponenten 0,5 bis 2,0 Isocyanat-Gruppen entfallen. Überschüssige Isocyanat-Gruppen können durch Feuchtigkeit abreagiert und zur Vernetzung beitragen. Es können aliphatische und/oder cycloaliphatische Polyisocyanate verwendet werden, wie Hexamethylendiisocyanat, Trimethylhexamethylendiisocyanat, Isophorondiisocyanat.

Beispiele für derartige Polyisocyanate sind ein Biuret-Gruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N[R] BAYER AG); ein Isocyanuratgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390[R] BAYER AG); oder Urethangruppen enthaltende Polyisocyanat, welche Reaktionsprodukte darstellen aus 3 Molen Toluylendiisocyanat und 1 Mol Trimethylolpropan mit einem NCO-Gehalt von etwa 17,5 % (entsprechend dem Handeslprodukt Desmodur L[R] BAYER AG). Bevorzugt eingesetzt werden Desmodur N[R] und Desmodur N 3390[R].

Die Überzugsmittel für transparente oder pigmentierte Deckschichten, welche das erfindungsgemäß einzusetzende (Meth)acryl-Copolymerisat enthalten, können neben Lösemitteln wie beispielsweise den zur Herstellung in Lösungspolymerisaten bereits genannten Lösemitteln zusätzlich lackübliche Hilfsstoffe enthalten; wie beispielsweise Lichtschutzmittel, Verlaufmittel auf der Basis von (Meth)acryl-Homopolymerisaten, Silikonöle; Weichmacher wie Phosphorsäure-, Phthalsäure- oder Zitronensäureester; Thixotropierungsmittel, pyrogenes Siliziumoxid, hydriertes Ricinusöl. Härtungsbeschleuniger für die Umsetzung des erfindungsgemäßen (Meth)acryl-Copolymerisats mit Polyisocyanatharzen, z.B. Organische Metallsalze, wie Dibutylzinndilaurat, Zink-Naphthenat, ferner tertiäre Aminogruppen enthaltende Verbindungen wie Triethylamin, Dimethylaminoethanol. Als Pigmente sind lackübliche Pigmente organischer oder anorganischer Natur geeignet.

Zur Steigerung des Festkörpergehalts können in den erfindungsgemäß verwendeten Überzugsmitteln ohne Eigenschaftseinbußen Anteile an High-Solid-Harzen mitverwendet werden, die gegebenenfalls Reaktivverdünner enthalten.

Die Überzugsmittel sind besonders geeignet zur Herstellung von Überzügen, die bei sehr kurzen Trocknungszeiten von beispielsweise 15 bis 20 min bei niedrigen Temperaturen von beispielsweise 20 bis 80°C, bevorzugt bis zu 60°C, zu einem montagefesten Produkt führen. Dabei sind die erhaltenen Überzüge nach der Trocknung im noch warmen Zustand klebefrei. Hierdurch ergeben sich sehr schnelle Durchgangszeiten bei der Montage der lackierten Substrate.

Ein weiterer Vorteil der erfindungsgemäß verwendeten Überzugsmittel liegt darin, daß sie in hohen Schichtdicken aufgetragen werden können. Die Überzugsmittel lassen sich problemlos in Schichtdicken von 35 bis 120 μm applizieren. Die Applikation derartiger Schichtdicken kann mit einem einzigen Spritzauftrag erfolgen. In der Praxis bevorzugt sind Schichtdicken bis zu etwa 60 μm und bevorzugt nicht unter 50 μm. Die genannten Schichtdicken beziehen sich jeweils auf den erhaltenen trockenen Überzug. Trotz der hohen Schichtdicken ergeben sich eine ausgezeichnete Ablaufsicherheit, Kochblasensicherheit und störungsfreie Applikation in nur einem einzigen Spritzgang. Spritznebel werden während des Spritzens von den Überzügen aufgenommen und führen zu keinen Störungen. Dies ist besonders überraschend, da die Überzugsmittel sehr rasch trocknen. Aufgrund dieser Eigenschaft ist es möglich, Ganzlakkierung beispielsweise von Autokarossen vorzunehmen. Die Überzugsmittel sind aufgrund ihrer vorstehend aufgezeigten Eigenschaften besonders für die Reparaturlackierung von Kraftfahrzeugkarosserien und deren Teilen geeignet. Dabei ist es mit den Überzugsmitteln auch möglich, pigmentfreie oder transparente Deckschichten von lufttrocknenden oder forciert-trocknenden Mehrschichtüberzügen herzustellen. Dabei kann beispielsweise die transparente Deckschicht, die aus dem Überzugsmittel erstellt wird, nach dem Naß-in-Naß-Verfahren auf konventionelle oder wäßrige Basislacke aufgetragen werden, worauf beide Schichten gemeinsam gehärtet werden. Beispielsweise kann eine derartige Härtung während 15 bis 20 min bei beispielsweise 50 bis 80°C erfolgen.

Die folgenden Beispiele dienen zur Erläuterung der Erfindung. Alle Teile beziehen sich auf das Gewicht.

### Harz-Beispiele 1 bis 3

Herstellung der (Meth)acryl-Copolymerisate Komponente A:

In einem 2 Liter-Dreihals-Schliffkolben, der mit einem Rührwerk, Kontaktthermometer, Kugelkühler und Tropftrichter ausgerüstet ist, wird Pos.I (Mengenangaben sind der Tabelle 1 zu entnehmen) vorgelegt und unter Rühren bei eingeschalteter Rückflußkühlung auf ca. 140°C geheizt. Innerhalb von 6 Stunden wird Pos. II (Monomerengemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 4 Stunden bei ca. 139°C nachpolymerisiert, so daß die Umsetzung >99 % ist. Danach wird auf 100°C abgekühlt und mit Pos. IV auf einen Festkörper von ca. 55 % verdünnt.

### Vergleichsversuch 1 (Beispiel 2 gemäß DE-OS 24 60 329)

280 g Styrol, 170 g Butylacrylat, 220 g 2-Hydroxyethylmethacrylat, 7 g Acrylsäure und 100 g AIBN wurden in soviel Toluol gelost, daß das Gesamtvolumen 3 1 betrug. Diese Lösung wurde innerhalb von 3 Stunden mit konstanter Geschwindigkeit zu 500 ml auf die Reaktionstemperatur erwärmten Toluol getropft. Es wurde 1 Stunde nachgerührt und Lösemittel, Restmonomere und Tetramethylbernsteinsäuredinitril im Vakuum entfernt. Das (Meth)acryl-Copolymerisat hatte eine Säurezahl von 5,6 mg KOH/g und eine Viskosität von 1880 mPa.s/25°, gelöst 68,0 % in Ethylglykolacetat.

**Vergleichsversuch 2 (Beispiel 7 gemäß DE-OS 24 60 329)**

400 g Styrol, 400 g Butylacrylat, 400 g 2-Hydroxyethylmethacrylat, 30 g Acrylsäure und 180 g AIBN wurden in soviel Toluol gelöst, daß das Gesamtvolumen 3 l betrug. Diese Lösung wurde innerhalb von 3 Stunden mit konstanter Geschwindigkeit zu je 750 ml auf die Reaktionstemperatur erwärmten Toluol und Isobutanol getropft. Es wurde 1 Stunde nachgerührt und Lösemittel, Restmonomere und Tetramethylbernsteinsäuredinitril im Vakuum entfernt. Das (Meth)acryl-Copolymerisat hatte eine Säurezahl von 14,4 mg KOH/g und eine Viskosität von 2950 mPa.s/25°, gelöst 69,1 % in Ethylglykolacetat.

Tabelle 1:

| (Einwaage in Gramm) | | | | |
|---|---|---|---|---|
| | | Harz-Beispiele | | |
| Position: | Bestandteile | 1 | 2 | 3 |
| I | Xylol | 50 | 50 | 50 |
| | Butylacetat | 131 | 131 | 131 |
| | Solvesso 100 | 162 | 162 | 162 |
| | | | | |
| II | Styrol | 275 | 275 | 264 |
| | n-Butylacrylat | 89 | 75 | 72 |
| | 2-Hydroxyethylmethacrylat | 166 | 178 | 191 |
| | Acrylsäure | 4 | 6 | 7 |
| | Di-tert.-Butylperoxid | 4 | 4 | 4 |
| | Tert.-Butylperoxyoctoat | 12 | 12 | 12 |
| | | | | |
| III | Butylacetat | 30 | 30 | 30 |
| | | | | |
| IV | Butylacetat | 77 | 77 | 77 |
| | | 1000 | 1000 | 1000 |
| Kennzahlen | | | | |
| Festkörper (%): | | 55,7 | 55,2 | 56,4 |
| Viskosität (mPa.s b. 25°C) : | | 1235 | 1850 | 2380 |
| Hydroxylzahl (bez. a. Festharz) : | | 134 | 140 | 150 |
| Säurezahl (bez. a. Festharz) : | | 8,1 | 9,9 | 11,2 |
| Glasübergangstemperatur (°C) : | | 49 | 53 | 53 |

Herstellung von Klarlacken unter Verwendung der Copolymerisate der Harzbeispiele 1 - 3 (Komponente A) und der Bindemittel-Komponenten aus den Vergleichsversuchen 1 und 2

1. erfindungsgemäß verwendeter Klarlack (Komponente A nach Herstellungsbeispiel 1)

In einem gereinigten trockenen Behälter werden 0,930 Gew.-Teile n-Butylacetat (98/100 %), 5,000 Gew.-Teile SOLVESSO 100[R] ?, 2,570 Gew.-Teile Xylol-Isomerengemisch, 0,750 Gew.-Teile Lichtschutzmittel vom Typ Benztriazol, 0,750 Gew.-Teile Lichtschutzmittel vom Typ HALS und 1,500 Gew.-Teile einer 10 %igen Silikonöl-Lösung in n-Butylacetat (98/100 %) vorgelegt und gründlich vermischt. Anschließend werden 88,500 Gew.-Teile des erfindungsgemäß hergestellten hydroxylgruppenhaltigen Copolymerisats (Herstellungsbeispiel 1) (55 % Festkörpergehalt; Komponente A) hinzugefügt und verrührt. Es resultiert ein Klarlack mit einer Auslaufzeit von ca. 180 Sekunden (Auslaufzeit mit DIN-Becher 4, DIN 53211, 20°C). Anschließend wird mit ca. 15 Gew.-Teilen n-Butylacetat 98/100 % auf eine Auslaufzeit von ca. 50 Sekunden (Auslaufzeit mit DIN-Becher 4, DIN 53211, 20°C) eingestellt.

Vergleich:

2. Klarlack mit dem Copolymerisat aus Vergleichsversuch 1

In einem gereinigten trockenen Behälter werden 9,557 Gew.-Teile n-Butylacetat (98/100 %), 10,749 Gew.-Teile SOLVESSO 100[R], 4,369 Gew. -Teile Xylol-Isomerengemisch, 0,750 Gew.-Teile Lichtschutzmittel vom Typ Benztriazol, 0,750 Gew.-Teile Lichtschutzmittel vom Typ HALS und 1,500 Gew.-Teile einer 10 %igen Silikonöl-Lösung in n-Butylacetat (98/100 %) vorgelegt und gründlich vermischt. Anschließend werden 72,325 Gew.-Teile des Copolymerisats aus Vergleichsversuch 1 hinzugefügt und verrührt. Es resultiert ein Klarlack mit einer Auslaufzeit von ca. 160 Sekunden (Auslaufzeit mit DIN-Becher 4, DIN 53211, 20°C). Anschließend wird mit ca. 13 Gew.-Teilen n-Butylacetat 98/100 % auf eine Auslaufzeit von ca. 50 Sekunden (Auslaufzeit mit DIN-Becher 4, DIN 53211, 20°C) eingestellt.

Vergleich:

3. Klarlack mit dem Copolymerisat aus Vergleichsversuch 2

In einem gereinigten trockenen Behälter werden 8,380 Gew.-Teile n-Butylacetat (98/100 %), 9,962 Gew.-Teile SOLVESSO 100[R], 4,117 Gew.-Teile Xylol-Isomerengemisch, 0,750 Gew.-Teile Lichtschutzmittel vom Typ Benztriazol, 0,750 Gew.-Teile Lichtschutzmittel vom Typ HALS und 1,500 Gew.-Teile einer 10 %igen Silikonöl-Lösung in n-Butylacetat (98/100 %) vorgelegt und gründlich vermischt. Anschließend werden 74,541 Gew.-Teile des Copolymerisats aus Vergleichsversuch 2 hinzugefügt und verrührt. Es resultiert ein Klarlack mit einer Auslaufzeit von ca. 165 Sekunden (Auslaufzeit mit DIN-Becher 4, DIN 53211, 20°C). Anschließend wird mit ca. 12 Gew.-Teilen n-Butylacetat 98/100 % auf eine Auslaufzeit von ca. 50 Sekunden (Auslaufzeit mit DIN-Becher 4, DIN 53211, 20°C) eingestellt.

Herstellung einer Härtelösung (Komponente B)

Als zweite Komponente (Komponente B) des Überzugsmittels wurde folgender Härter bereitet:

|  | Gew.-Teile: |
| --- | --- |
| Aliphatisches Polyisocyanat auf der Basis von Hexamethylendiisocyanat (Desmodur[R] N 3390/90) | 43,400 |
| Xylol-Isomerengemisch | 12,500 |
| SOLVESSO 100[R] (Kohlenwasserstoffgemisch Siedebereich: 164 - 180°C) | 27,000 |
| Methoxypropylacetat | 4,000 |
| n-Butylacetat (98 %ig) | 8,860 |
| Ethoxypropylacetat | 4,100 |
| Dibutylzinndilaurat-Lösung (10 %ig) | 0,140 |
|  | 100,000 |

Anwendung der erhaltenen Überzugsmittel

Die vorstehend bereiteten Bindemittel A bzw. Bindemittel gemäß den Vergleichsversuchen 1 bis 2 enthaltenen Überzugsmittel bzw. Klarlacke wurden jeweils kurz vor der Verarbeitung im Volumenverhältnis von 50,0 % (Bindemittel A), 47,2 % (Vergleichsversuch 1) und 46,5 % (Vergleichsversuch 2) mit dem vorstehenden Härter (Komponente B) des Überzugsmittels vermischt. Die leichten Abweichungen des Mischungsverhältnisses sind zur Vernetzung von 100 % notwendig.

Die erhaltenen Reaktionslacke wurden durch Spritzauftrag in einer Trockenschichtstärke von 50 µm bis 60 µm im Naß-in-Naß-Verfahren auf eine Basislackschicht aufgebracht und nach einer Ablüftphase von 5 Minuten anschließend 20 Minuten bei 60°C gehärtet. Die Ergebnisse der lacktechnischen Untersuchungen sind in der nachfolgenden Tabelle gezeigt.

| Tabelle der lacktechnischen Untersuchungen | | | |
| --- | --- | --- | --- |
|  | Vergleichsversuch 1 | Vergleichsversuch 2 | Komponente A |
| Viskosität in Sekunden | ca. 50 | ca. 50 | ca. 50 |

(fortgesetzt)

| Tabelle der lacktechnischen Untersuchungen | | | |
|---|---|---|---|
| | Vergleichsversuch 1 | Vergleichsversuch 2 | Komponente A |
| Mischung nach Vol.-% | | | |
| Komponente A | 100 | 100 | 100 |
| Komponente B | 47,2 | 46,5 | 50 |
| Vernetzungsgrad in % | 100 | 100 | 100 |
| Verarbeitungsviskosität in Sekunden | 18-19 | 18-19 | 18 - 19 |
| **Staubtrocknung** | | | |
| nach DIN 53150 | 15 Min | 15 Min | 5 Min |
| **Lufttrocknung (16 Stunden bei 20°C)** | | | |
| Klebefreiheit | + | + | + |
| Fülle/Glanz | + | + | + |
| Verlauf | + | + | + |
| Abdeckprobe (Klebeband) | | | |
| 5 Minuten (Markierung nach Abziehen des Klebestreifens) | - | (-) | + |
| Verschwinden der | über 60 Min. | über 60 Min. | nach 30 Min |
| Markierung | | nicht verschwunden | verschwunden |
| Superkraftstoffablauf (Quellung) | quillt | quillt | quillt nicht |
| **Ofentrocknung (20 Minuten bei 60°C)** | | | |
| Klebefreiheit warm | -- | - | + |
| Klebefreiheit kalt | - | - | + |
| Härte | - | (-) | + |
| Fülle/Glanz | + | + | + |
| Verlauf | + | + | + |
| Abdeckprobe (Klebeband) 5 Minuten | -- | -- | + |
| Verschwinden der Markierung | -- | -- | + |
| Abdeckprobe (Klebeband) 30 Minuten nach zusätzlich 16 Stunden Lufttrocknung bei 20°C | -- | - | + |
| Verschwinden der Markierung | - | - | + |
| Superkraftstoffablauf | - | (-) | + |
| Erläuterungen: <br> + = sehr gut <br> (-) = befriedigend <br> - = schlecht <br> -- = sehr schlecht | | | |

Diese Erläuterungen gelten auch für die nachstehenden pigmentierten Überzugsmittel.

Herstellung und Anwendung von pigmentierten Überzugsmitteln.

Zur Herstellung einer für alle pigmentierten Rezepturen einsetzbaren Lösung wird folgende Mischung (in Gew-Teilen) angefertigt.

| | |
|---|---:|
| Komponente A (Herstellungsbeispiel 1) | 85,116 |
| Xylol | 8,851 |
| Solvesso 100 | 0,892 |
| Butylacetat 98/100 % | 3,575 |
| Silikonöllösung 10 %ig in Butylacetat 98/100 % | 1,200 |
| Diethanolamin | 0,330 |
| Dibutylzinndilauratlösung, 10 %ig in Butylacetat | 0,036 |
| | 100,000 |

Nach üblichen Disperigerverfahren wurden unter Einsatz handelsüblicher Netz-, Dispergier- und Antiabsetzmittel wurden folgende pigmentierte Rezepturen erstellt.

a) Weiß mit Titandioxid,
b) schwarz mit Ruß FW 200 und
c) rot mit Irgazinrot BO.

| Rezepturen: | | | |
|---|---|---|---|
| | **weiß** | **schwarz** | **rot** |
| Bindemittellösung | 20,00 | 30,00 | 20,00 |
| Dispergiermittel | 1,62 | | |
| handelsübliche Absetzmittel | 6,50 | | |
| Dispergiermittel | | 5,60 | 1,50 |
| Titandioxid | 40,48 | | |
| Ruß FW 200 | | 5,56 | |
| Irgazinrot | | | 8,30 |
| **Vordispergierung unter dem Dissolver** | | | |
| Bindemittellösung | 31,40 | 34,00 | 31,00 |
| **Perlmühlendispergierung** | | | |
| Bindemittellösung | | 28,40 | 39,20 |

Diese Mahlpasten werden wie folgt mit der Bindemittellösung gemischt auf ca. 100 Sekunden (Auslaufzeit mit DIN-Becher 4, DIN 53211, 20 C) mit Butylacetat 98/100 % eingestellt.

| | | | |
|---|---|---|---|
| Mahlpaste | 61,76 | 31,00 | 43,90 |
| Bindemittellösung | 39,24 | 69,00 | 56,10 |

Die Überzugsmittel wurden jeweils kurz vor der Verarbeitung im Volumenverhältnis von 50,0 % mit dem Härter (Komponente B) des Überzugsmittels vermischt.
Die erhaltenen Reaktionslacke wurden durch Spritzauftrag in einer Trockenschichtstärke von 50 µm bis 60 µm im Naß-in-Naß-Verfahren auf eine Basislackschicht aufgebracht und nach einer Ablüftphase von 5 - 10 Minuten anschließend 20 Minuten bei 60°C gehärtet. Die Ergebnisse der lacktechnischen Untersuchungen sind in der nachfolgenden Tabelle gezeigt.

| Tabelle der lacktechnischen Untersuchungen | | | |
|---|---|---|---|
| Lacktechnische Beispiele: | | | |
| | weiß | schwarz | rot |
| Viskosität in Sekunden | 20 | 20 | 20 |
| **Staubtrocknung** | | | |
| nach DIN 53150 | 15 Min. | 15 Min. | 15 Min. |
| **Lufttrocknung (16 Stunden bei 20°C)** | | | |
| Klebefreiheit | + | + | + |
| Fülle/Glanz | + | + | + |
| Verlauf | + | + | + |
| Abdeckprobe (Klebeband) 5 Minuten | + | + | + |
| Verschwinden der Markierung | + | + | + |
| Superkraftstoffablauf | + | + | + |
| **Ofentrocknung (20 Minuten bei 60°C)** | | | |
| Klebefreiheit warm | + | + | + |
| Klebefreiheit kalt | + | + | + |
| Härte | + | + | + |
| Fülle/Glanz | + | + | + |
| Verlauf | + | + | + |
| Abdeckprobe (Klebeband) 5 Minuten | + | + | + |
| Verschwinden der Markierung | + | + | + |
| Abdeckprobe (Klebeband) 30 Minuten nach zusätzlich 16 Stunden Lufttrocknung bei 20°C | + | + | + |
| Verschwinden der Markierung | + | + | + |
| Superkraftstoffablauf | + | + | + |

**Patentansprüche**

1. Verfahren zur Reparaturlackierung von Kraftfahrzeugkarosserien oder deren Teilen, **dadurch gekennzeichnet, dass** man einen pigmentierten Deckschichtüberzug aufbringt oder eine Basislacküberzugsschicht aus einem Basislack auf Lösemittelbasis oder auf wässriger Basis aufbringt und die Basislackschicht mit einem pigmentfreien, transparenten Überzug versieht, wobei man zur Herstellung des pigmentierten Deckschichtüberzugs oder zur Herstellung des pigmentfreien transparenten Überzugs ein Überzugsmittel auf der Basis von hydroxyfunktionellen (Meth)acryl-Copolymerisaten, aliphatischen und/oder cycloaliphatischen Polyisocyanaten, Lösemitteln sowie gegebenenfalls lacküblichen Additiven und Pigmenten verwendet, das frei von Epoxidharzen und Nitrocellulose ist und als Bindemittel enthält:

A) ein oder mehrere hydroxylgruppenhaltige (Meth)acryl-Copolymerisate aus

| a1) | 47 - 53 Gew.-% Vinylverbindungen, | einer oder mehrerer aromatischer |
|---|---|---|
| a2) | 28 - 33 Gew.-% | eines oder mehrerer Hydroxyalkylmethacrylate |
| a3) | 14 - 19 Gew.-% | eines oder mehrerer Alkyl(meth)acrylate, und |
| a4) | 0,5 - 2 Gew.-% | Acrylsäure und/oder Methacrylsäure |

mit einer Hydroxylzahl von 120 - 160 mg KOH/g, einer Säurezahl von 5 bis 15 mg KOH/g, einem Gewichtsmittel von 10000 bis 20000 und einer Glasübergangstemperatur von +40°C bis +60°C,

B) ein aliphatisches und/oder cycloaliphatisches Polyisocyanat oder ein Gemisch derartiger Polyisocyanate in einer solchen Menge, dass auf eine Hydroxylgruppe der Komponente A) 0,5 bis 2,0 Isocyanatgruppen entfallen.

2. Verfahren nach Anspruch 1, **dadurch gekennzeichnet, dass** als Komponente A) ein (Meth)acryl-Copolymerisat eingesetzt wird, worin

die Komponente a1) ein Styrol oder ein Styrolderivat ist,
die Komponente a2) ein Hydroxyethylmethacrylat und
die Komponente a3) n-Butyl(meth)acrylat ist.

3. Verfahren nach Anspruch 1 oder 2, worin die Komponente A) erhältlich ist aus:

a1) 47,5 - 52,5 Gew.-% Styrol

a2) 28,0 - 33,0 Gew.-% 2-Hydroxyethylmethacrylat

a3) 14,0 - 19,0 Gew.-% n-Butylacrylat und

a4) 0,5 - 1,5 Gew.-% Acrylsäure.

4. Verfahren nach Anspruch 1, 2 oder 3, **dadurch gekennzeichnet, dass** die Komponente B) ein aliphatisches und/oder cycloaliphatisches Polyisocyanat mit einer Funktionalität gleich oder größer 3 und einer NCO-Zahl von 15 bis 25 ist.

5. Verfahren nach einem der Ansprüche 1 bis 4, **dadurch gekennzeichnet, dass** das transparente Überzugsmittel naß-in-naß auf die Basislackschicht aufgebracht und mit dieser gemeinsam gehärtet wird.

6. Verfahren nach einem der Ansprüche 1 bis 5, **dadurch gekennzeichnet, dass** der pigmentierte Deckschichtüberzug oder der pigmentfreie Überzug durch Sprühauftrag in einer Schichtdicke von bis zu 120 Um in einem einzigen Spritzgang aufgebracht wird.

7. Verfahren nach einem der Ansprüche 1 bis 6, **dadurch gekennzeichnet, dass** die erstellten Überzüge bei Temperaturen von 20 bis 80°C getrocknet werden.

8. Verfahren nach einem der Ansprüche 1 bis 7, **dadurch gekennzeichnet, dass** bei Trocknungszeiten der Überzüge von 15 bis 20 min gearbeitet wird.

## Claims

1. A process for refinishing automotive bodies or parts thereof, **characterised in that** a pigmented top coat layer is applied or a base coat layer of a solvent-borne or water-borne base coat is applied and the base coat layer is provided with an unpigmented, transparent coating layer, wherein the pigmented top coat layer is produced or the unpigmented, transparent coating layer is produced using a coating composition based on hydroxy-functional (meth)acrylic copolymers, aliphatic and/or cycloaliphatic polyisocyanates, solvents, optionally together with additives and pigments conventional in coatings, which coating composition contains neither epoxy resins nor nitrocellulose and contains as binder:

A) one or more (meth)acrylic copolymers which contain hydroxyl groups, prepared from

| a1) | 47-53 wt.% | of one or more aromatic vinyl compounds, |
|---|---|---|
| a2) | 28-33 wt.% | of one or more hydroxyalkyl methacrylates, |
| a3) | 14-19 wt.% | of one or more alkyl (meth)acrylates, and |
| a4) | 0.5-2 wt.% | of acrylic acid and/or methacrylic acid, |

with a hydroxyl value of 120-160 mg KOH/g, an acid value of 5 to 15 mg KOH/g, a weight average molecular weight of 10,000 to 20,000 and a glass transition temperature of +40°C to +60°C,

B) an aliphatic and/or cycloaliphatic polyisocyanate or a mixture of such polyisocyanates.in an amount such that there are 0.5 to 2.0 isocyanate groups per hydroxyl group of component A).

2. A process according to claim 1, **characterised in that** the component A) used is a (meth)acrylic copolymer, in which

component a1) is a styrene or a styrene derivative,
component a2) is a hydroxyethyl methacrylate, and
component a3) is n-butyl (meth)acrylate.

3. A process according to claim 1 or 2, in which component A) is obtainable from

a1) 47.5-52.5 wt.% of styrene
a2) 28.0-33.0 wt.% of 2-hydroxyethyl methacrylate
a3) 14.0-19.0 wt.% of n-butyl acrylate and
a4) 0.5-1.5 wt.% of acrylic acid.

4. A process according to claim 1, 2 or 3, **characterised in that** component B) is an aliphatic and/or cycloaliphatic polyisocyanate with a functionality greater than or equal to 3 and an NCO value of 15 to 25.

5. A process according to one of claims 1 to 4, **characterised in that** the transparent coating composition is applied wet-in-wet onto the base coat layer and is cured jointly therewith.

6. A process according to one of claims 1 to 5, **characterised in that** the pigmented top coat layer or the unpigmented coating layer is sprayed to a film thickness of up to 120 μm in a single spray pass.

7. A process according to one of claims 1 to 6, **characterised in that** the resultant coating layers are dried at temperatures of 20 to 80°C.

8. A process according to one of claims 1 to 7, **characterised in that** drying times of 15 to 20 minutes are employed for the coating layers.


**Revendications**

1. Procédé pour le vernissage de réparation de carrosseries de véhicules automobiles ou de pièces de celles-ci, **caractérisé en ce qu'**on applique un revêtement pigmenté pour couche de recouvrement ou on applique une couche de revêtement en vernis de base, constituée d'un vernis de base à base de solvant ou à base aqueuse et on pourvoit la couche de vernis de base d'un revêtement transparent exempt de pigment, en utilisant, pour la préparation du revêtement pigmenté pour couche de recouvrement ou pour la préparation du revêtement transparent exempt de pigment, un agent de revêtement, à base de copolymères (méth)acryliques à fonctionnalité hydroxy, de polyisocyanates aliphatiques et/ou cycloaliphatiques, de solvants ainsi que le cas échéant d'additifs et de pigments usuels dans le vernis, qui est exempt de résines époxydes et de nitrocellulose et qui contient comme liant

A) un ou plusieurs copolymères (méth)acryliques contenant des groupes hydroxyle et constitués de

a1) 47-53 % en poids d'un ou de plusieurs composés de vinyle aromatiques,
a2) 28-33 % en poids d'un ou plusieurs méthacrylates d'hydroxyalkyle,

a3) 14-19 % en poids d'un ou de plusieurs (méth)acrylates d'alkyle et,

a4) 0,5-2 % en poids d'acide acrylique et/ou d'acide méthacrylique,

avec un indice d'hydroxyle de 120-160 mg de KOH/g, un indice d'acide de 5 à 15 mg de KOH/g, un poids moyen de 10000 à 20000 et une température de transition vitreuse de +40 °C à +60 °C,

B) un polyisocyanate aliphatique et/ou cycloaliphatique ou un mélange de polyisocyanates de ce type en une quantité telle qu'à un groupe hydroxyle du composant A) correspondent de 0,5 à 2,0 groupes isocyanate.

2. Procédé selon la revendication 1, **caractérisé en ce qu'**on utilise comme composant A) un copolymère (méth) acrylique dans lequel

le composant a1) est le styrène ou un dérivé de styrène,

le composant a2) est un méthacrylate d'hydroxyéthyle et

le composant a3) est le (méth)acrylate de n-butyle.

3. Procédé selon les revendications 1 ou 2, dans lequel on peut obtenir le composant A) à partir de

a1) 47,5-52,5 % en poids de styrène

a2) 28,0-33,0 % en poids de méthacrylate de 2-hydroxyéthyle

a3) 14,0-19,0% en poids d'acrylate de n-butyle et

a4) 0,5-1,5 % en poids d'acide acrylique.

4. Procédé selon la revendication 1, 2 ou 3, **caractérisé en ce que** le composant B) est un polyisocyanate aliphatique et/ou cycloaliphatique ayant une fonctionnalité égale ou supérieure à 3 et un indice de NCO de 15 à 25.

5. Procédé selon l'une quelconque des revendications 1 à 4, **caractérisé en ce que** l'agent de revêtement transparent est appliqué par un procédé humide sur humide sur la couche de vernis de base et est durci en même temps que celle-ci.

6. Procédé selon l'une quelconque des revendications 1 à 5, **caractérisé en ce qu'**on applique le revêtement pigmenté pour couche de recouvrement ou le revêtement exempt de pigment par pulvérisation en une épaisseur de couche jusqu'à 120 μm en un seul processus de pulvérisation.

7. Procédé selon l'une quelconque des revendications 1 à 6, **caractérisé en ce que** les revêtements réalisés sont séchés à des températures de 20 à 80 °C.

8. Procédé selon l'une quelconque des revendications 1 à 7, **caractérisé en ce qu'**on travaille avec des temps de séchage des revêtements de 15 à 20 minutes.